# EUROPÄISCHE PATENTSCHRIFT

(11) **EP 1 910 713 B1**
(45) Veröffentlichungstag und Bekanntmachung des Hinweises auf die Patenterteilung: **21.03.2012**
(21) Anmeldenummer: 06762804.0
(22) Anmeldetag: 25.07.2006
(51) Int. Cl.: F16H 59/70, F16H 63/38

(54) **STELLVORRICHTUNG FÜR EIN GETRIEBE**
ADJUSTING DEVICE FOR A TRANSMISSION
DISPOSITIF D'ACTIONNEMENT POUR UNE BOITE DE VITESSES

(30) Priorität: 26.07.2005 DE 102005034864
(43) Veröffentlichungstag der Anmeldung: 16.04.2008
(73) Patentinhaber: KNORR-BREMSE Systeme für Nutzfahrzeuge GmbH, 80809 München (DE)
(72) Erfinder: DÖRR, Wolfgang, 82223 Eichenau (DE); SKRIBA, Zoltán, H-1037 Budapest (HU)
(74) Vertreter: Schönmann, Kurt
(86) Internationale Anmeldenummer: PCT/EP2006/007313
(87) Internationale Veröffentlichungsnummer: WO 2007/012460

(56) Entgegenhaltungen:
- EP-A1- 1 350 991
- EP-A2- 1 152 174
- DE-A1- 10 032 907
- FR-A1- 2 707 360

## Beschreibung

Die vorliegende Erfindung betrifft eine Stellvorrichtung für ein Getriebe, insbesondere für ein Kraftfahrzeuggetriebe, mit zumindest einem beweglichen Stellelement, dessen Stellung von zumindest einem Sensor detektiert wird, wobei eine Nockenbahn vorgesehen ist, die Abschnitte mit unterschiedlichen Höhen aufweist, die dazu vorgesehen sind, von einem mit dem Sensor gekoppelten Abtastelement mechanisch abgetastet zu werden, und wobei die Nockenbahn zumindest eine Raste aufweist, in die ein Rastelement eingreifen kann, wobei der Sensor und das Rastelement als ein gemeinsames Bauteil ausgebildet sind. Eine solche gattungsgemäße Vorrichtung ist aus der EP 1 152 174 bekannt.

Mit dem Begriff "Getriebe" sollen sowohl Drehzahl- als auch Drehzahl-Drehmomentwandler sowie deren Komponenten bezeichnet werden, insbesondere sollen Kraftfahrzeug-Hauptgetriebe, -Kupplungen etc. mit diesem Begriff erfasst werden.

Bei der Steuerung derartiger Getriebe erfolgt eine Umsetzung von Eingangssignalen, die beispielsweise ein Bediener oder eine Steuerung erzeugt, in eine mechanische Bewegung von Teilen des Getriebes. So können beispielsweise bei einem Gang- beziehungsweise Übersetzungswechsel eines Kraftfahrzeuggetriebes eine Wähl- und eine Schaltrichtung erfasst, zunächst in Bewegungen eines Wähl- und eines Schalthebels umgesetzt und dann entsprechende Teile des Getriebes bewegt werden. Umgekehrt müssen die Bewegungen beziehungsweise Positionen beispielsweise der Wähl- und Schalthebel sowie die weiterer Teile des Getriebes wie beispielsweise die Position der Schaltgabeln sensiert werden.

Gemäß dem Stand der Technik werden bei der Steuerung von Fahrzeuggetrieben Wegsensoren eingesetzt. Diese weisen üblicherweise einen linear beweglichen Stift auf. Dabei ist der Sensorstift beispielsweise so mit der Schaltwelle gekoppelt, dass eine translatorische Bewegung der Schaltgabel zu einer linearen Bewegung des Sensorstifts führt. Der Sensor ist dabei üblicherweise im unteren Ölraum des Getriebes angeordnet und daher hohen Temperatur- und Medienbelastungen ausgesetzt. Aus diesem Grund werden üblicherweise induktive Wegsensoren eingesetzt, die sehr robust sind. Bei diesen induktiven Sensoren bewegt sich der Sensorstift im Inneren einer Spule. Eine Bewegung beispielsweise der Schaltwelle bewirkt eine Bewegung des Sensorstiftes, die wiederum eine Induktivitätsänderung in der Spule hervorruft. Alternativ kann gemäß dem Stand der Technik die zu sensierende lineare Bewegung der Schaltwelle über eine Nockenbahn dem Wegsensor zugeführt werden. Dazu sind auf der Nockenbahn Abschnitte mit unterschiedlichen Höhen vorgesehen, wobei verschiedenen Höhen bestimmten Positionen der Schaltwelle entsprechen. Diese unterschiedlichen Höhen werden durch einen geeignet angeordneten linearen Wegsensor detektiert.

Gleichzeitig wird in den gattungsgemäßen Stellvorrichtungen üblicherweise die Bewegung von Stellelementen wie etwa einer Schaltstange mittels Rastvorrichtungen beeinflusst. Dazu ist in der Regel ein in Richtung des Stellelementes bewegliches und in diese Richtung vorgespanntes Rastelement in Form eines Stiftes vorgesehen, der in entsprechende Rasten eingreift. Vor einer Bewegung des Stellelements, die den Raststift aus einer dieser Rasten herausführt, muss eine bestimmte Gegenkraft überwunden werden.

Der Erfindung liegt die Aufgabe zugrunde, eine Stellvorrichtung für Getriebe zur Verfügung zu stellen, die eine möglichst geringe Anzahl an Bauteilen aufweist.

Diese Aufgabe wird mit den Merkmalen des unabhängigen Anspruchs gelöst.

Vorteilhafte Weiterbildungen und Ausgestaltungen ergeben sich aus den Unteransprüchen.

Der sensor und das Rastelement sind als ein gemeinsames Bauteil ausgebildet. Auf diese Weise können Elemente, die für die Funktionalität des Sensors vorgesehen sind, ebenfalls für die Funktionalität des Verrastens eingesetzt werden. Dies ermöglicht bei einer entsprechenden Ausgestaltung des Sensors eine Reduzierung der Anzahl an Bauteilen. Insbesondere können auf verschiedenen Abschnitten der Nockenbahn Raststellungen auf unterschiedlichen Höhen vorgesehen sein. In diesem Fall kann in der jeweiligen Rastposition die entsprechende Stellung des Stellelements detektiert werden.

Bei einer bevorzugten Ausführungsform ist vorgesehen, dass der Sensor ein bewegliches Sensorelement aufweist, das mit dem Abtastelement mechanisch gekoppelt oder einstückig mit diesem ausgebildet ist. Eine Bewegung des Sensorelements führt dabei zu einem sich ändernden Ausgangssignal des Sensors. Die Verwendung eines separaten Abtastelements, beispielsweise in Form eines Stößels, ermöglicht so eine noch weitergehende Gestaltungsfreiheit in der. Anbringung des Sensors.

Bei einer ebenfalls bevorzugten Ausführungsform ist vorgesehen, dass das Abtastelement in Richtung auf die Nockenbahn zu vorgespannt ist. Dadurch befindet sich das Abtastelement in stetigem mechanischen Kontakt mit der Nockenbahn. Der Sensor kann damit die augenblickliche Position beziehungsweise eine momentan stattfindende Positionsänderung des Stellelements sicher detektieren und gleichzeitig das Stellelement in den vorgesehenen Rastpositionen sichern.

Des weiteren kann bei einer Ausführungsform vorteilhaft vorgesehen sein, dass das Abtastelement gleichzeitig das Rastelement bildet. Auf diese Weise kann ein korrektes Einrasten besonders sicher detektiert werden.

Es ergibt sich eine vorteilhafte Ausführungsform insbesondere dadurch, dass die Nockenbahn dazu vorgesehen ist, zumindest abschnittsweise in einem Ölraum eines Getriebes angeordnet zu werden. Dies ist in vielen Fällen vorteilhaft, da sich die zu überwachenden Stellelemente dort befinden.

Darüber hinaus kann die Erfindung dadurch vorteilhaft ausgeführt werden, dass der Sensor dazu vorgesehen ist, zumindest abschnittsweise außerhalb eines Ölraums eines Getriebes angeordnet zu werden. Somit kann der Sensor außerhalb einer für ihn ungünstigen Umgebung angebracht werden und damit eine kostengünstigere und/oder eine höhere Zuverlässigkeit aufweisende Konstruktionsform für den Sensor gewählt werden. Beispielsweise kann der Sensor in den Deckel eines Getriebes integriert werden. Somit ist nur die Unterseite des Sensors in Kontakt mit dem Ölraum und dort den entsprechenden hohen Belastungen ausgesetzt.

Weiterhin kann in vorteilhafter Weise vorgesehen sein, dass die Nockenbahn mechanisch mit dem Stellelement gekoppelt oder an diesem angeordnet ist. Der Sensor kann so mittels seines Abtastelements die auf die Nockenbahn übertragene mechanische Bewegung des Stellelements erfassen und bei einer entsprechenden Position des Stellelements mittel einer Raste gesichert werden. Beispielsweise kann die Nockenbahn auch direkt in die Form des Stellelements integriert sein. Dies stellt einen nur unwesentlich höheren Konstruktions- und Herstellungsaufwand dar.

Bei einer besonders bevorzugten Ausführungsform ist vorgesehen, dass die Abschnitte der Nockenbahn mit unterschiedlichen Höhen zweidimensional angeordnet sind. Dadurch können zwei voneinander unabhängige Bewegungsrichtungen beziehungsweise die momentane Position des Stellelements hinsichtlich zweier unabhängiger Bewegungsrichtungen mit nur einem Sensor erfasst und entsprechende Rastpositionen zur Verfügung gestellt werden. Dabei kann zur eindeutigen Detektierung jeder zu erfassenden diskreten Stellung jeder Position eine eindeutige Höhe auf der zweidimensionalen Nockenbahn zugeordnet werden. Alternativ können aber auch mehrere Positionen mit einer gleichen Höhe codiert werden, um eine Positionsgruppe zu bilden, die steuerungstechnisch gleich zu behandeln ist.

Weiterhin kann die Erfindung derart ausgeführt werden, dass das Stellelement sowohl eine Translations- als auch eine Rotationsbewegung ausführen kann, wobei über den Sensor sowohl eine Winkelmessung als auch eine lineare Wegmessung erfolgt. Eine derartige kombinierte Erfassung von einer linearen Wegmessung und einer Winkelgröße mittels eines einzigen Sensors reduziert die Komplexität der Stellvorrichtung sowohl hinsichtlich der Anzahl an Sensoren als auch hinsichtlich des Auswerteaufwandes.

Eine Ausführungsform ist dadurch ausgebildet , dass eine Mehrzahl von Sensoren vorgesehen ist, die zumindest im Wesentlichen parallel zueinander angeordnet sind. Die parallele Ausrichtung einer Mehrzahl von Sensoren erleichtert konstruktiv die elektrische Anbindung der Sensoren und vereinfacht deren Montage.

Insbesondere kann die Erfindung derart bevorzugt ausgeführt sein, dass mit der Mehrzahl der Sensoren die Winkelpositionen eines Wählhebels und eines Schalthebels sowie die Stellung von zumindest einer Schaltgabel des Getriebes detektiert werden. Auf diese Weise lassen sich alle für die Steuerung des Getriebes notwendigen Stellungsinformationen erfassen.

Des Weiteren ist insbesondere vorteilhaft, dass der Mehrzahl von Sensoren eine gemeinsame oder eine Mehrzahl von zumindest ähnlichen Auswerteschaltungen zugeordnet ist. Die Verwendung von möglichst wenigen, zumindest gleichartigen Auswerteschaltungen - im Idealfall nur einer Auswerteschaltung - führt zu einer deutlichen Kostensenkung.

Es ist ebenfalls vorgesehen, dass der Mehrzahl von Sensoren eine entsprechende Mehrzahl von Abschnitte mit unterschiedlichen Höhen aufweisenden Nockenbahnen und eine entsprechende Mehrzahl von Abtastelementen zugeordnet sind, wobei die Nockenbahnen so ausgelegt sind, dass sich für die Abtastelemente vergleichbare Hubbewegungen ergeben. So können aufgrund der vergleichbaren Hubbewegungen trotz der von den Stellelementen durchgeführten unterschiedlichen Bewegungen gleiche Sensoren eingesetzt werden, was die Anzahl an verschiedenen Bauelementen innerhalb der Stellvorrichtung vorteilhaft reduziert.

Eine ebenfalls vorteilhafte Ausführungsform sieht vor, dass der Sensor ein induktiver Wegsensor ist. Induktive Wegsensoren sind insbesondere für den Einsatz in Umgebungen mit einer hohen Temperatur- und/oder Medienbelastung geeignet und können mittels der Nockenbahn sowohl Translations- als auch Rotationsbewegungen erfassen.

Der Erfindung liegt die Erkenntnis zugrunde, die Detektion der Stellung beziehungsweise der Bewegungsrichtung eines Stellelements durch das Vorsehen einer Nockenbahn mit einem Sichern des Stellelementes durch ein Vorsehen von Rasten in bzw. auf der Nockenbahn zu kombinieren. Dies ermöglicht eine Reduzierung der Anzahl an Bauelementen. Des Weiteren können mit Hilfe einer zweidimensionalen Nockenbahn zwei unabhängige Bewegungsrichtungen mit einem Sensor detektiert werden.

Die Erfindung wird nun mit Bezug auf die begleitenden Zeichnungen anhand bevorzugter Ausführungsformen beispielhaft erläutert.

Dabei zeigen:
- Figur 1: eine Schnittansicht eines Sensors mit Abtastelement und Nockenbahn;
- Figur 2: eine Schnittansicht einer erfindungsgemäßen Ausführungsform der Stellvorrichtung, eingebaut in ein Getriebe;
- Figur 3: Schnittansichten einer Nockenbahn sowie eine schematische Darstellung derselben; und
- Figur 4: eine Schnittansicht einer alternativen Ausführungsform der erfindungsgemäßen Stellvorrichtung, eingebaut in ein Getriebe.

Bei der nachfolgenden Beschreibung der Zeichnung bezeichnen gleiche Bezugszeichen gleiche oder vergleichbare Komponenten.

Die hier dargestellten Ausführungsformen der erfindungsgemäßen Stellvorrichtung sind für ein 3-Gang-Hauptgetriebe mit Rückwärtsgang vorgesehen. Selbstverständlich können mit der erfindungsgemäßen Vorrichtung auch Getriebe mit einer höheren oder einer niedrigeren Anzahl beziehungsweise auch Getriebegruppen und Kombinationen von Getrieben gestellt werden. Des Weiteren soll auch in diesem Zusammenhang der Begriff "Getriebe" insbesondere auch Kupplungen, Teile davon sowie andere stellbare Elemente umfassen.

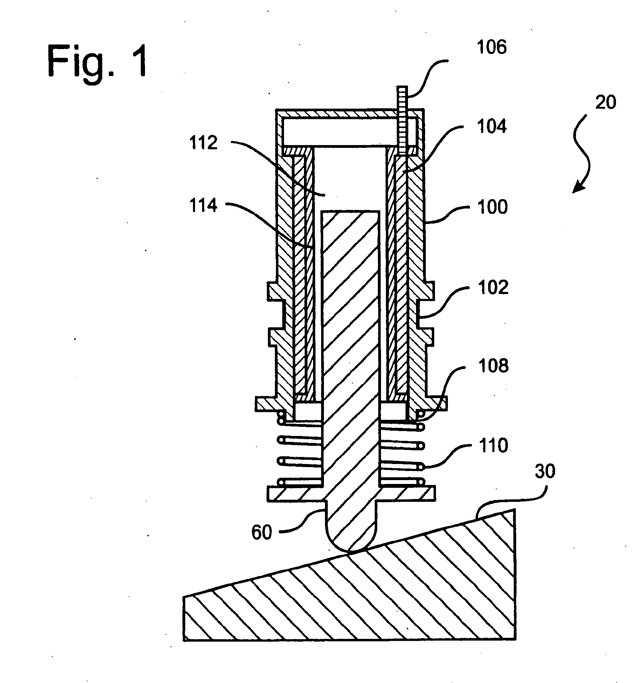

Figur 1 zeigt eine Schnittansicht eines erfindungsgemäßen Sensors 20 mit Abtast- und Rastelement 60 und Nockenbahn 30. Zunächst soll im Zusammenhang mit Figur 1 die Funktionsweise des Sensors an sich erläutert werden. Der erfindungsgemäße Sensor 20 weist ein zylindrisches Gehäuse 100 auf, das mit einer umlaufenden Befestigungsnut 102 versehen ist. Innerhalb des Gehäuses ist eine Spule 104 angeordnet. Die Spule 104 ist mit einer Signalleitung 106 verbunden, die aus dem Gehäuse 100 herausführt. Innerhalb der Spule 104 befindet sich das Abtast- und Rastelement 60, das sich entlang der Symmetrieachse des Sensors 20 erstreckt und in diesem Fall das bewegliche Sensor- und Rastelement bildet. Das Abtastelement 60 ragt an der Öffnung 108 des Gehäuses 100 aus diesem heraus und ist mittels einer Feder 110 mechanisch mit diesem gekoppelt. Die Feder 110 spannt das Abtastelement 60 gegen eine Nockenbahn 30 vor und übt so eine Druckkraft auf das Abtastelement 60 aus, welche dieses von dem Gehäuse 100 des Sensors 20 weg gegen die Nockenbahn 30 drückt. Die Spule 104 des Sensors 20 ist gegenüber dem Innenraum 112 des Sensors 20 und damit auch gegen das Abtastelement 60 mittels einer Ummantelung 114 abgegrenzt. Das Gehäuse 100 des Sensors 20 ist über die Umfangsnut 102 beispielsweise ortsfest mit einem Gehäuse eines Getriebes (nicht dargestellt) verbunden, die Nockenbahn 30 kann ortsfest mit einem zu sensierenden Stellelement (nicht abgebildet) verbunden sein.

Die mit einem sich bewegenden Stellelement verbundenen Nockenbahn 30 bewegt sich bei einer entsprechenden Positionsänderung des Stellelements relativ zu dem Gehäuse 100 des Sensors 20. Aufgrund der mechanischen Kopplung des Abtastelements 60 mit der Nockenbahn 30 über die Feder 110 bleibt das Abtast- und Rastelement 60 in stetem Kontakt mit der Nockenbahn 30. Dabei wird das Rastelement 60 insbesondere auch in eine vorhandene Rastvertiefung (hier nicht dargestellt) gedrückt und bietet einer über diese Vertiefung hinaus gehenden Bewegung des Stellelements einen Widerstand dar. Die sich verändernde Höhe der Nockenbahn 30, relativ zum unteren Rand 108 des Gehäuses 100, bewirkt eine Bewegung des Abtastelements 60 im Inneren 112 des Sensors 20. Dabei werden in der Induktionsspule 104 des Sensors 20 elektrische Impulse erzeugt, die über die elektrische Signalleitung 106 einer geeigneten Auswerteschaltung (hier nicht abgebildet) zugeführt und dort verarbeitet werden können.

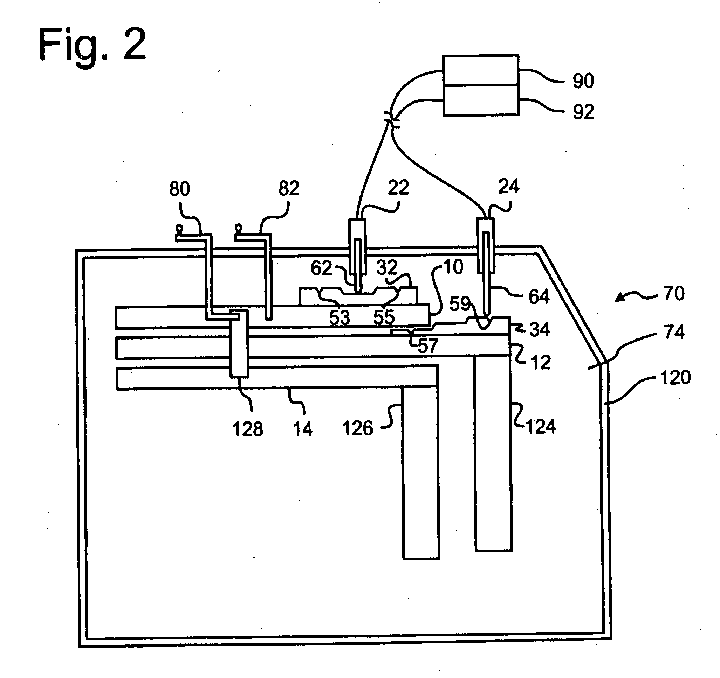

Figur 2 zeigt eine Schnittansicht einer erfindungsgemäßen Ausführungsform der Stellvorrichtung, eingebaut in ein Getriebe. Diese schematische Darstellung zeigt Teile eines Getriebes 70. Auf für die Darstellung und Erklärung hier nicht näher interessierender Teile wie beispielsweise Zahnräder, Antriebswelle, etc. wurde aus Gründen der Übersichtlichkeit verzichtet. Innerhalb des Gehäuses des 3-Gang-Hauptgetriebes 70 mit Rückwärtsgang sind zwei Schaltstangen 12, 14 mit den zugehörigen Schaltgabeln 124, 126 dargestellt. Des Weiteren ist eine Stellvorrichtung, bestehend aus Stellelement 10, Wählhebel 80, Schalthebel 82 sowie einem Betätigungselement 128, abgebildet. In das Gehäuse der Getriebesteuerung sind zwei induktive Wegsensoren 22, 24 vertikal integriert. Die Sensoren 22, 24 entsprechen in ihrer Bauweise dem in Bezug auf Figur 1 beschriebenen und dort dargestellten Sensor 20. Die Abtastelemente 62, 64 der Sensoren 22, 24 stehen in mechanischem Kontakt mit den entsprechenden Nockenbahnen 32, 34. Dabei ist die erste Nockenbahn 32 an dem Stellelement 10 angeordnet und als zweidimensionale Nockenbahn ausgeführt. Die Nockenbahn 32 weist Rastabschnitte 53, 55 auf. In diese greift das ein Abtast- und Rastelement 62 bildende bewegliche Sensorelement des Induktionssensors 22. Die zweite Nockenbahn 34 ist als eindimensionale Nockenbahn an der Schaltstange 12 angebracht und mit Rastabschnitten 57, 59 versehen. Die Sensoren 22, 24 sind über Signalleitungen mit entsprechenden Auswerteschaltungen 90, 92 verbunden.

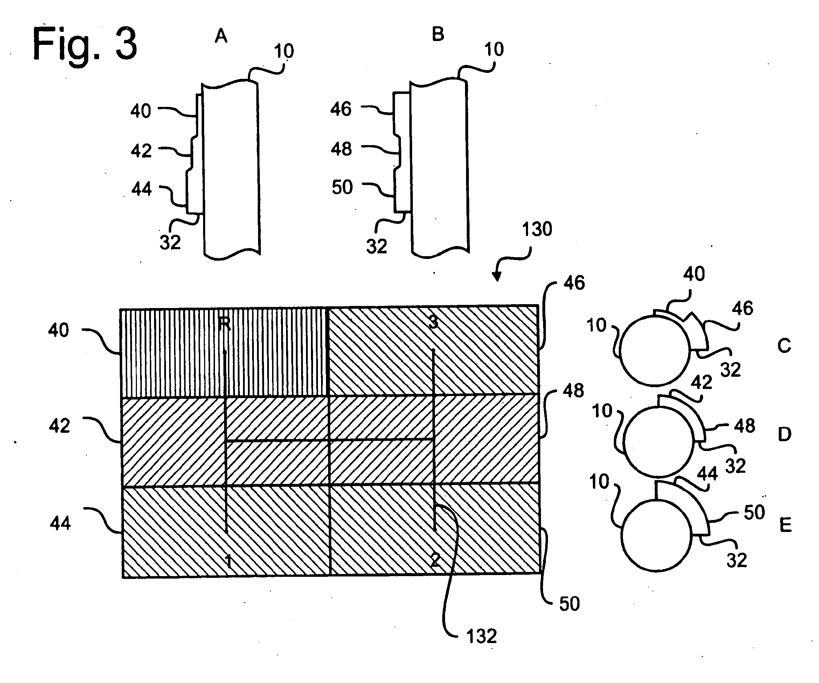

Die für das Schalten des Getriebes 70 benötigten Informationen über die Wähl- und Schaltrichtung werden dem Getriebe 70 über eine Bewegung des Wählhebels 80 beziehungsweise des Schalthebels 82 vermittelt. Dabei versetzt der Wählhebel 80 über eine entsprechend gestaltete Mechanik, insbesondere auch über das Betätigungselement 128, das Stellelement 10 in eine Rotationsbewegung um dessen Längsachse, stellt damit eine mechanische Kopplung zwischen dem Stellelement 10 und der auszuwählenden Schaltstange 12, 14 her und gibt die entsprechende andere Schaltstange 12, 14 frei. Während einer Schaltbewegung hingegen versetzt der Schalthebel 82 das Stellelement 10 in eine lineare Bewegung entlang dessen Längsachse und nimmt dabei eine entsprechend mit dem Stellelement 10 gekoppelte Schaltstange 12, 14 mit. Die entsprechende freigegebene Schaltstange 12, 14 wird nicht bewegt. Auf diese Weise können die mit den Schaltgabeln 124, 126 gekoppelten, nicht dargestellten, Teile des Getriebes 70 in den Kraftfluss eingerückt oder aus diesem entfernt werden. Die von dem Stellelement 10 ausgeführten Rotations- und Translationsbewegungen werden über die zweidimensionale Nockenbahn 32 auf das Abtast- und Rastelement 62 des Sensors 22 übertragen. Eine detailliertere Darstellung der Nockenbahn 32 und ihrer Funktionalität ist in Figur 3 und in der zugehörigen Beschreibung zu finden. Die jeweils einer Endposition der Schaltstange 10 entsprechenden Positionen sind mit Rastvertiefungen 53, 55 versehen. In dieser Darstellung sind dabei beispielhaft zwei Rastabschnitte 53, 55 dargestellt, es können aber auch mehr Rastpositionen zur Verfügung gestellt werden. Durch die Vorspannung des des Rast- und Sensorelements 62 in Richtung des Stellelements 10 greift jenes in die Rastabschnitte 53, 55 und sichert so das Stellelement 10 in der jeweiligen Position. Die durch das Abtast- und Sensorelement 62 hervorgerufene Induktionsänderung innerhalb des Sensors 22 wird als elektrisches Messsignal über eine entsprechende Signalleitung an die Auswerteschaltung 90 übertragen und dort ausgewertet. Auf diese Weise kann die augenblickliche Position beziehungsweise Stellung des Stellelements 10 mit Hilfe der entsprechend gestalteten Nockenbahn 32 und nur einem zugeordneten Sensor 22 erkannt werden. In ähnlicher Weise können die Stellungen der Schaltstange 12 detektiert werden. Diese kann drei Positionen einnehmen. Dies schlägt sich in drei Höhen der Nockenbahn 34 nieder, die einer Neutralstellung und zwei Endpositionen entsprechen. Die zwei Rastabschnitte 57, 59 der Nockenbahn 34, die den Endpositionen zugeordnet sind, sichern die Schaltstange 12 in diesen Stellungen. Bei Positionswechseln überträgt der Abtaststift 64 die veränderte Höhe als Messsignal über eine Signalleitung an die Auswerteschaltung 92. Die Auswerteschaltungen 90, 92 können im Wesentlichen gleich ausgeführt werden, da die Höhenänderungen der entsprechenden Nockenbahnen ähnlich gestaltet werden können. Da die zweidimensionale Nockenbahn 32 unter Umständen eine größere Anzahl an beziehungsweise eine genauere Differenzierung zwischen den Höhen benötigt, sind in diesem Ausführungsbeispiel zwei ähnliche Auswerteschaltungen 90, 92 vorgesehen. Die Sensoren 22, 24 sind durch ihre Integration senkrecht in den Getriebedeckel im Wesentlichen von dem unteren Innenraum 74 des Getriebes entfernt. Lediglich die Unterseite der Sensoren 22, 24 sowie die Abtastelemente 62, 64 ragen in den Ölraum 74. Figur 3 zeigt Schnittansichten einer erfindungsgemäßen Nockenbahn und eine schematische Darstellung derselben. Die dargestellten Längsschnitte A, B verlaufen entlang der Längsachse des Stellelements 10 der Figur 2, die Querschnitte C, D, E senkrecht zur Längsachse des Stellelements 10. Auf die Darstellung der Rastabschnitte wurde in dieser Figur aus Gründen der Übersichtlichkeit verzichtet. Die Schnittansichten sowie die "Abwicklung" 130 der Nockenbahn 32 und das darüber gelegte Schaltschema 132 des 3-Gang-Hauptgetriebes mit Rückwärtsgang mit zwei Schaltstangen veranschaulichen den Aufbau und die Funktionalität der Nockenbahn 32, insbesondere die sich aus den Bewegungen des Stellelements 10 ergebenden Schaltzustände und die entsprechend zugeordneten Höhen der Nockenbahn 32. Die "Abwicklung" 130 der Nockenbahn 32 zeigt neun Felder 40-50. Diese Felder 40-50 entsprechen Abschnitten der Nockenbahn 32, wobei die unterschiedlichen Schraffuren die verschiedenen Höhen der einzelnen Abschnitte 40-50 andeuten. Die "Abwicklung" 130 ist so orientiert, dass die Längsachse des Stellelements 10 senkrecht verläuft, wie dies auch in den Längsschnitten A, B dargestellt ist. Das darüber gelegte Schaltschema 132 zeigt an, welches Feld 40-50 der Nockenbahn 32 bei entsprechenden Stellungen der Wähl- und Schalthebel 80, 82 in Kontakt mit dem Abtastelement 32 gelangt. Die Elemente 44, 46, 50, die Vorwärtsgängen zugeordnet sind, weisen eine größte Höhe, die Elemente 42, 48, die Neutralstellungen des Getriebes repräsentieren, eine mittlere Höhe und das Feld 40, das einem eingelegten Rückwärtsgang zugeordnet ist, eine niedrigste Höhe auf. Eine Bewegung, die in senkrechter Richtung erfolgt, also beispielsweise von Feld 50 über Feld 48 zu Feld 46, entspricht einer Bewegung des Stellelements 10 entlang seiner Längsachse und damit einer Schaltbewegung. Eine Bewegung in horizontaler Richtung, beispielsweise von Feld 42 zu Feld 48, entspricht einer Drehung des Stellelements 10 um seine Längsachse, also einer Wählbewegung. Die Längsschnitte A, B zeigen den Höhenverlauf der Nockenbahn 32, wie ihn das Abtastelement 62 des Sensors 22 der Figur 2 bei unterschiedlichen Drehstellungen des Stellelements 10 abtastet. Der Verlauf der Nockenbahn 32 der Querschnittsansicht A zeigt dabei den Höhenverlauf bei einem Gangwechsel, der von Gang 1 in den Rückwärtsgang R oder umgekehrt stattfindet. In analoger Weise zeigt die Querschnittsansicht B den Höhenverlauf der Nockenbahn 32 bei einem Gangwechsel von Gang 2 zu Gang 3 oder umgekehrt. Die Schnittansichten C, D, E zeigen dagegen Querschnitte senkrecht zur Längsachse des Stellelements 10. Die Schnittansicht C zeigt dabei die Höhenverhältnisse der Nockenbahn 32, die zwischen dem dem Rückwärtsgang R entsprechenden Feld 40 und dem dem Vorwärtsgang 3 entsprechenden Feld 46 herrschen. Die Schnittansicht D zeigt, dass in den Neutralstellungen der Felder 42 und 48 eine einheitliche mittlere Höhe auf der Nockenbahn 32 vorliegt. Die Schnittansicht E zeigt wiederum die größte Höhe in der Nockenbahn 32, die auf den Feldern 44 und 50 vorliegt, die beide jeweils den eingelegten Vorwärtsgängen 1 und 2 entsprechen.

Bei einer Bewegung des Stellelements 10 entlang seiner Längsachse, verursacht durch eine entsprechende Bewegung des Schalthebels 82, tastet das Abtastelement 62 des Sensors 22 die Nockenbahn 32 ab. Dabei kann sich das Abtastelement entweder entlang der Felder 46, 48, 50 bewegen und somit einen Gangwechsel zwischen dem Gang 2 und dem Gang 3 darstellen. Alternativ kann es sich zwischen den Feldern 40, 42 48 bewegen, und damit einen Gangwechsel zwischen dem Rückwärtsgang R und dem Vorwärtsgang 1 abbilden. Bei der erstgenannten Bewegung kann das Abtastelement die Vorwärtsgänge 2 und 3 von der Neutralstellung, die dem Feld 48 entspricht, unterscheiden. Bei der zweiten genannten Bewegung können der Rückwärtsgang R, die Neutralstellung und der Vorwärtsgang aufgrund der unterschiedlich zugewiesenen Höhen sensiert werden. Der Wechsel zwischen den beiden Neutralpositionen, die durch die Felder 42 und 48 kodiert werden, braucht bei dieser Ausführungsform nicht unterschieden werden.

Das dargestellte H-Schaltungsschema mit vier Endpositionen ist selbstverständlich nur ein Ausführungsbeispiel. Es könne auf diese Weise auch kompliziertere Stellvorrichtungen mit mehreren auszuwählenden Schaltstangen beziehungsweise auch eine Stellvorrichtung mit lediglich einer Schaltstange gesteuert werden. Des Weiteren ist die hier durchgeführte Beschränkung auf drei Höhen, die einem Rückwärtsgang, den Neutralstellungen und den Vorwärtsgängen entsprechen, ebenfalls willkürlich. Theoretisch kann jeder einzunehmenden Stellung eine individuelle Höhe zugewiesen werden. unter Umständen ist es sogar möglich, bei entsprechender feiner Abtastung der Nockenbahn eine noch wesentlich größere Anzahl an Zwischenstellungen abzutasten.

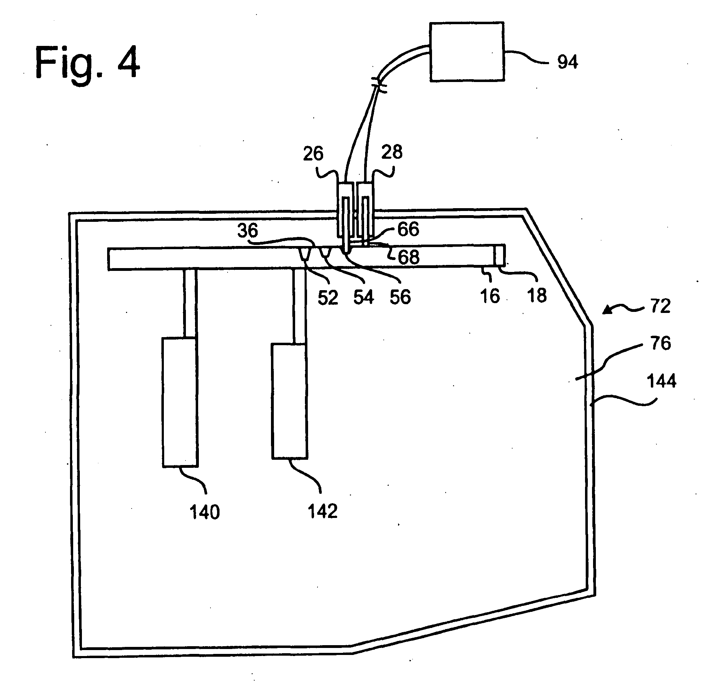

Figur 4 zeigt eine Schnittansicht einer alternativen Ausführungsform der erfindungsgemäßen Stellvorrichtung, eingebaut in ein Getriebe. Das dargestellte Kraftfahrzeuggetriebe 72 weist zwei Schaltlineale 16, 18 auf, an denen entsprechende Schaltgabeln 140, 142 angebracht sind. Die Schaltlineale 16, 18 weisen beide jeweils eine Nockenbahn 36 auf. Die Nockenbahn 36 des Schaltlineals 16 ist sichtbar, die des Schaltlineals 18 ist durch das davor liegende Schaltlineal 16 verdeckt. Die Nockenbahnen 36 weisen Rastabschnitte 52, 54, 56 auf. In diese greifen die Abtastelemente 66, 68 bildende beweglichen Sensorelemente von Induktionssensoren 26, 28. Diese Sensoren 26, 28 sind im Gehäuse 144 des Getriebes 72 integriert, so dass sie zumindest teilweise aus dem Ölraum 76 des Getriebes 72 herausragen. Die durch die Sensoren 26, 28 erzeugten elektrischen Signale werden über Signalleitungen einer gemeinsamen Auswerteschaltung 94 zur Auswertung zugeführt.

Die Sensoren 26, 28 entsprechen in ihrem prinzipiellen Aufbau dem Sensor 20 der Figur 1. Gleichzeitig neben der Erzeugung von induktiven Signalen werden die Abtaststifte dazu verwendet, die Schaltlineale 16, 18 in den Rastpositionen 52, 54, 56 zu verrasten. Bei einer Bewegung der Schaltlineale 16, 18 entlang ihrer Längsachse gleiten die Abtastelemente 66, 68 entlang den Nockenbahnen 36. Aufgrund einer entsprechend vorgewählten Vorspannung muss zwischen den einzelnen Rastpositionen 52-56 eine Kraft überwunden werden. Die unterschiedlichen Rastpositionen 52-56 sind durch unterschiedliche Höhen kodiert und können so zur Feststellung der jeweiligen Position des Schaltlineals 16, 18 dienen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Stellelement
- 12: erste Schaltstange
- 14: zweite Schaltstange
- 16: erstes Schaltlineal
- 18: zweites Schaltlineal
- 20: Induktionssensor
- 22: Sensor für zweidimensionale Nockenbahn
- 24: Sensor für eindimensionale Nockenbahn
- 26: Rastsensor
- 28: Rastsensor
- 30: Nockenbahn
- 32: zweidimensionale Nockenbahn
- 34: eindimensionale Nockenbahn
- 36: Rastnockenbahn
- 40: Nockenbahnabschnitt, niedrige Höhe
- 42: Nockenbahnabschnitt, mittlere Höhe
- 44: Nockenbahnabschnitt, große Höhe
- 46: Nockenbahnabschnitt, große Höhe
- 48: Nockenbahnabschnitt, mittlere Höhe
- 50: Nockenbahnabschnitt, große Höhe
- 52, 54: Rastabschnitte der eindimensionalen Nockenbahn
- 53, 55: Rastabschnitte der zweidimensionalen Nockenbahn
- 55, 57: Rastabschnitt der eindimensionalen Nockenbahn
- 60: Abtastelement
- 62: Abtastelement für die zweidimensionale Nockenbahn
- 64: Abtastelement für die eindimensionale Nockenbahn
- 66: Abtastelement für die Rastnockenbahn
- 68: Abtastelement für die Rastnockenbahn
- 70: Getriebe
- 72: Getriebe
- 74: Ölraum
- 76: Ölraum
- 80: Wählhebel
- 82: Schalthebel
- 90: Auswerteschaltung
- 92: Auswerteschaltung
- 94: Auswerteschaltung
- 100: Gehäuse
- 102: Umlaufnut
- 104: Spule
- 106: elektrische Anschlüsse
- 108: Gehäuseöffnung
- 110: Feder
- 112: Innenraum
- 114: Ummantelung
- 120: Getriebegehäuse
- 124: erste Schaltgabel
- 126: zweite Schaltgabel
- 128: Betätigungsvorrichtung
- 130: Abwicklung der zweidimensionalen Nockenbahn
- 132: Schaltschema
- 140: erste Schaltgabel
- 142: zweite Schaltgabel
- 144: Getriebegehäuse
- A, B: Längsschnitt entlang der Längsachse des Stellelements 10
- C, D, E: Querschnitte senkrecht zur Längsachse des Stellelements 10

## Patentansprüche

1. Stellvorrichtung für ein Getriebe, insbesondere für ein Kraftfahrzeuggetriebe, mit zumindest einem beweglichen Stellelement (10-16), dessen Stellung von zumindest einem Sensor (20-28) detektiert wird, wobei eine Nockenbahn (30-36) vorgesehen ist, die Abschnitte mit unterschiedlichen Höhen aufweist, die dazu vorgesehen sind, von einem mit dem Sensor (20-28) gekoppelten Abtastelement (60-68) mechanisch abgetastet zu werden, und wobei die Nockenbahn (32-36) zumindest eine Raste (52-59) aufweist, in die ein Rastelement eingreifen kann, wobei der Sensor (20-28) und das Rastelement als ein gemeinsames Bauteil ausgebildet sind, **dadurch gekennzeichnet, dass** eine Mehrzahl von Sensoren (22-28) vorgesehen ist, die zumindest im Wesentlichen parallel zueinander angeordnet sind, und dass der Mehrzahl von Sensoren (22-28) eine entsprechende Mehrzahl von Abschnitten (40-54) mit unterschiedlichen Höhen aufweisenden Nockenbahnen (32-36) und eine entsprechende Mehrzahl von Abtastelementen (62-68) zugeordnet sind, wobei die Nockenbahnen (32-36) so ausgelegt sind, dass sich für die Abtastelemente (62-68) vergleichbare Hubbewegungen ergeben.

2. Stellvorrichtung nach Anspruch 1, **dadurch gekennzeichnet, dass** der Sensor (20-28) ein bewegliches Sensorelement (60-68) aufweist, das mit dem Abtastelement (60-66) mechanisch gekoppelt oder einstückig mit diesem ausgebildet ist.

3. Stellvorrichtung nach Anspruch 1 oder 2, **dadurch gekennzeichnet, dass** das Abtastelement (60-66) in Richtung auf die Nockenbahn (30-36) zu vorgespannt ist.

4. Stellvorrichtung nach einem der vorangehenden Ansprüche, **dadurch gekennzeichnet, dass** das Abtastelement (60-66) gleichzeitig das Rastelement bildet.

5. Stellvorrichtung nach einem der vorangehenden Ansprüche, **dadurch gekennzeichnet, dass** die Nockenbahn (30-36) dazu vorgesehen ist, zumindest abschnittsweise in einem Ölraum eines Getriebes angeordnet zu werden.

6. Stellvorrichtung nach einem der vorangehenden Ansprüche, **dadurch gekennzeichnet, dass** der Sensor (20-28) dazu vorgesehen ist, zumindest abschnittsweise außerhalb eines Ölraums (74, 76) eines Getriebes (70, 72) angeordnet zu werden.

7. Stellvorrichtung nach einem der vorangehenden Ansprüche, **dadurch gekennzeichnet, dass** die Nockenbahn (30-36) mechanisch mit dem Stellelement (10-16) gekoppelt oder an diesem angeordnet ist.

8. Stellvorrichtung nach einem der vorangehenden Ansprüche, **dadurch gekennzeichnet, dass** die Abschnitte (40-50) der Nockenbahn (32) mit unterschiedlichen Höhen zweidimensional angeordnet sind.

9. Stellvorrichtung nach einem der vorangehenden Ansprüche, **dadurch gekennzeichnet, dass** das Stellelement (10) sowohl eine Translations- als auch eine Rotationsbewegung ausführen kann, wobei über den Sensor (22) sowohl eine Winkelmessung als auch eine lineare Wegmessung erfolgt.

10. Stellvorrichtung nach einem der vorangehenden Ansprüche, **dadurch gekennzeichnet, dass** mit der Mehrzahl der Sensoren (22, 24) die Winkelpositionen eines Wählhebels (80) und eines Schalthebels (82) sowie die Stellung von zumindest einer Schaltgabel (12) des Getriebes (70) detektiert werden.

11. Stellvorrichtung nach einem der vorangehenden Ansprüche, **dadurch gekennzeichnet, dass** der Mehrzahl von Sensoren (22-28) eine gemeinsame (94) oder eine Mehrzahl von zumindest ähnlichen (90, 92) Auswerteschaltungen zugeordnet ist.

12. Stellvorrichtung nach einem der vorangehenden Ansprüche, **dadurch gekennzeichnet, dass** der Sensor (20-28) ein induktiver Wegsensor ist.

## Claims

1. An adjusting device for a transmission, in particular for a motor vehicle transmission, with at least one movable adjusting element (10-16), the position of which is detected by at least one sensor (20-28), wherein a cam path (30-36) is provided which has sections of different heights which are provided to be scanned mechanically by a scanning element (60-68) coupled to the sensor (20-28), and wherein the cam path (32-36) has at least one catch (52-59) in which a latching element can engage, wherein the sensor (20-28) and the latching element are designed as a common component, **characterized in that** a plurality of sensors (22-28) is provided, said sensors being arranged at least essentially parallel to one another, and **in that** the plurality of sensors (22-28) is assigned a corresponding plurality of cam paths (32-36) having sections (40-54) of different heights and a corresponding plurality of scanning elements (62-68), with the cam paths (32-36) being designed in such a manner that comparable stroke movements arise for the scanning elements (62-68).

2. The adjusting device as claimed in claim 1, **characterized in that** the sensor (20-28) has a movable sensor element (60-68) which is coupled mechanically to the scanning element (60-66) or is formed integrally therewith.

3. The adjusting device as claimed in claim 1 or 2, **characterized in that** the scanning element (60-66) is prestressed in the direction of the cam path (30-36).

4. The adjusting device as claimed in one of the preceding claims, **characterized in that** the scanning element (60-66) simultaneously forms the latching element.

5. The adjusting device as claimed in one of the preceding claims, **characterized in that** the cam path (30-36) is provided in order to be arranged at least in some sections in an oil chamber of a transmission.

6. The adjusting device as claimed in one of the preceding claims, **characterized in that** the sensor (20-28) is provided to be arranged at least in some sections outside an oil chamber (74, 76) of a transmission (70, 72).

7. The adjusting device as claimed in one of the preceding claims, **characterized in that** the cam path (30, 36) is coupled mechanically to the adjusting element (10-16) or is arranged thereon.

8. The adjusting device as claimed in one of the preceding claims, **characterized in that** the sections (40-50) of the cam path (32) of different heights are arranged two-dimensionally.

9. The adjusting device as claimed in one of the preceding claims, **characterized in that** the adjusting element (10) can execute both a translational and a rotational movement, with both an angular measurement and a linear displacement measurement taking place via the sensor (22).

10. The adjusting device as claimed in one of the preceding claims, **characterized in that** the angular positions of a selector lever (80) and of a shift lever (82) and the position of at least one shift fork (12) of the transmission (70) are detected with the plurality of sensors (22, 24).

11. The adjusting device as claimed in one of the preceding claims, **characterized in that** the plurality of sensors (22-28) is assigned a common evaluation circuit (94) or a plurality of at least similar evaluation circuits (90, 92).

12. The adjusting device as claimed in one of the preceding claims, **characterized in that** the sensor (20-28) is an inductive displacement sensor.

## Revendications

1. Dispositif actionneur pour une boîte de vitesses, en particulier pour une boîte de vitesses pour automobiles, à au moins un organe de réglage (10-16), dont la position est détectée par au moins un détecteur (20-28), à une voie à cames (30-36) étant formée, qui présente des segments aux hauteurs différentes, qui sont prévues pour leur détection mécanique moyennant d'un organe palpeur (60-68) couplé avec un détecteur (20 - 28), et à ladite voie à cames (32-36) comprenant au moins un cran d'arrêt (52-59), dans lequel se peut mettre en prise un élément d'encliquetage, audit détecteur (20-28) et audit élément d'encliquetage étant configurés en tant que composant commun, **caractérisé en ce qu'**une pluralité de détecteurs (22-28) est disposée, qui sont configurées au moins essentiellement l'un en parallèle à l'autre, et **en ce qu'**une pluralité correspondante de segments à voies à cames (32 - 36), qui présentent des hauteurs différentes, et une pluralité correspondante des organes palpeurs (62 - 68) sont affectées à ladite pluralité de détecteurs (22-28), auxdites voies à cames (32-36) étant conçues d'une telle manière, que des mouvements de course comparables soient achevés pour lesdits organes palpeurs (62-68).

2. Dispositif actionneur selon la revendication 1, **caractérisé en ce que** ledit détecteur (20-28) comprend un élément détecteur mobile (60-68), qui est accouplé audit organe palpeur (60-66) de façon mécanique ou formé de façon intégrale avec lui.

3. Dispositif actionneur selon la revendication 1 ou 2, **caractérisé en ce que** ledit organe palpeur (60-66) est mis en précontrainte en une direction vers ladite voie à cames (30-36).

4. Dispositif actionneur selon une quelconque des revendications précédentes, **caractérisé en ce que** ledit organe palpeur (60-66) constitue en même temps ledit élément d'encliquetage.

5. Dispositif actionneur selon une quelconque des revendications précédentes, **caractérisé en ce que** ladite voie à cames (30-36) est prévue à un arrangement, au moins en segments, dans un réservoir à huile d'une boîte de vitesses.

6. Dispositif actionneur selon une quelconque des revendications précédentes, **caractérisé en ce que** ledit détecteur (20-28) est prévu à un arrangement, au moins en segments, à l'extérieur d'un réservoir à huile (74, 76) d'une boîte de vitesses (70, 72).

7. Dispositif actionneur selon une quelconque des revendications précédentes, **caractérisé en ce que** ladite voie à cames (30-36) est couplée, de façon mécanique, audit organe de réglage (10-16) ou est disposé au dernier.

8. Dispositif actionneur selon une quelconque des revendications précédentes, **caractérisé en ce que** lesdits organes (40-50) desdites voie à cames (32) aux hauteurs différentes sont disposés en deux dimensions.

9. Dispositif actionneur selon une quelconque des revendications précédentes, **caractérisé en ce que** ledit organe de réglage (10) est apte à réaliser un mouvement de translation ainsi qu'un mouvement de rotation, à un mesurage d'angle et aussi un mesurage de distance linéaire étant réalisé moyennant ledit détecteur (22).

10. Dispositif actionneur selon une quelconque des revendications précédentes, **caractérisé en ce que** ladite pluralité des détecteurs (22, 24) sert à détecter des positions angulaires d'un levier sélecteur (80) et d'un levier de commande (82) ainsi que la position d'au moins une fourchette de boîte de vitesses (12) de la boîte de vitesses (70).

11. Dispositif actionneur selon une quelconque des revendications précédentes, **caractérisé en ce qu'**un circuit d'évaluation commune (94) ou une pluralité de circuits d'évaluation au moins similaires (90, 92) est affecté à ladite pluralité de détecteurs (22-28).

12. Dispositif actionneur selon une quelconque des revendications précédentes, **caractérisé en ce que** ledit détecteur (20-28) est un détecteur de distance inductif.
